# EUROPEAN PATENT SPECIFICATION

(11) **EP 3 577 084 B1**
(45) Date of publication and mention of the grant of the patent: **08.03.2023**
(21) Application number: 18702967.3
(22) Date of filing: 30.01.2018
(51) Int. Cl.: C08K 3/08, C09D 5/24, C09D 7/61, C03C 17/10, C09D 1/00

(54) **MATERIAL HAVING A METAL LAYER AND A PROCESS FOR PREPARING THIS MATERIAL**
MATERIAL MIT EINER METALLSCHICHT UND VERFAHREN ZUR HERSTELLUNG DIESES MATERIALS
MATÉRIAU AYANT UNE COUCHE MÉTALLIQUE ET SON PROCÉDÉ DE PRÉPARATION

(30) Priority: 31.01.2017 EP 17305109
(43) Date of publication of application: 11.12.2019
(73) Proprietor: Centre National de la Recherche Scientifique, 75016 Paris (FR); Université de Haute Alsace, 68093 Mulhouse Cedex (FR)
(72) Inventor: BALAN, Lavinia, 68720 Hochstatt (FR); ZAIER, Mohamed, 68200 Mulhouse (FR)
(74) Representative: Lavoix
(86) International application number: PCT/EP2018/052262
(87) International publication number: WO 2018/141741

(56) References cited:
- EP-A1- 2 123 723
- EP-A1- 3 073 321
- EP-B1- 0 985 333
- WO-A1-2012/104594
- XIAOQUN ZHU ET AL: "Direct, Rapid, Facile Photochemical Method for Preparing Copper Nanoparticles and Copper Patterns", LANGMUIR, vol. 28, no. 40, 9 October 2012 (2012-10-09), pages 14461-14469, XP055382684, US ISSN: 0743-7463, DOI: 10.1021/la303244p
- JRADI S ET AL: "Spatially controlled synthesis of silver nanoparticles and nanowires by photosensitized reduction", NANOTECHNOLOGY, IOP, BRISTOL, GB, vol. 21, no. 9, 5 March 2010 (2010-03-05), page 95605, XP020175280, ISSN: 0957-4484

## Description

The present invention relates to a material having a metal layer and in particular a material having a metal surface layer. In other words, the present invention relates to a material or an object having a metal coating. The invention also relates to the preparation of such material by a method comprising the photo-reduction of a metal precursor. The present invention also relates to the way this material or object is covered or coated with a metal layer.

It is known to prepare metal nanoparticles in polymer matrixes (L Balan, M Jin, JP Malval, H Chaumeil, A Defoin, L Vidal « Fabrication of silver nanoparticle-embedded polymer promoted by combined photochemical properties of 2,7-diaminofluorene derivative dye » Macromolecules 41 2008, 9359-9365; L. Balan, C. Turck, O. Soppera, D. Lougnot, "Holographic recording with polymer nanocomposites containing silver nanoparticles photogenerated in situ by the interference pattern" Chemistry of Materials 2124, 2009, 5711-5718; L Balan, J-P Malval, R Schneider, D. Le Nouen, D-J Lougnot « In situ fabrication of polyacrylate-silver nanocomposite through photoinduced tandem reactions involving eosin dye» Polymer 51 2010, 1363-1369; S. Jradi, L. Balan, X.H. Zeng, J. Plain, D.J. Lougnot, P. Royer, R. Bachelot, O. Soppera "Spatially controlled synthesis of silver nanoparticles and nanowires by photosensitized reduction" Nanotechnology 21, 2010, 095605). However such material containing metal particles in polymer matrix, and particularly nanoparticles, may present a variety of colors but do not exhibit reflective properties due to the presence of a continuous metal surface or do not generate a metal surface layer enabling conducting electricity.

The international patent application WO 2016151141 (or EP 3 073 321) also relates to the preparation of nanoparticles and a matrix. The material comprises a metal surface layer at the surface of the matrix formed *in situ.* The material comprises a gradient of particles with the highest concentration of particles at the surface. It is difficult to prepare a homogenous layer of metal particles, It is even more difficult if a small thickness of the metal layer has to be prepared.

G.Mustatea, L. Vidal, I. Calinescu, A. Dobre, M. lonescu and L. Balan (J Nanopart Res (2015) 17:46, *A photochemical approach designed to improve the coating of nanoscale silver films onto food plastic wrappings intended to control bacterial hazards*) also disclosed the preparation of Ag nanoparticles films photo-chemically deposited on a glass substrate, but the thickness of silver films was inhomogeneous with a broad distribution in the size of the nanoparticles with restricted optical properties. More particularly, the film of nanoparticles does not comprise a continuous contact of nanoparticles and therefore does not form a Ohmic conductor.

WO 2012/104594 teaches a method comprising contacting metal ions with a material capable of reducing the metal ions to metal atoms upon exposure to visible light, and exposing the material to visible light whereby to generate metal atoms from the metal ions.

EP 0 985 333 relates to a method for modifying surfaces in an organic material, especially a polymeric material. The method is especially related to modifying non conducting surfaces to facilitate the arrangement of conducting material in distinct patterns on said surfaces.

The invention aims at providing a material having a metal surface layer.

The invention also aims at providing a material presenting an electronically conducting metal layer and/or or a thermally conducting metal layer. In particular, the invention aims at providing a Ohmic conducting layer.

The invention also aims at providing a material presenting optical properties, in particular presenting a metal mirror surface, especially at the material-metal interface.

The invention also aims at providing a material presenting a good homogeneity of the thickness of the metal layer, and in particular a homogenous roughness.

The invention aims at providing a process with *in situ* reduction of the metal particles for preparing such materials. The invention aims at providing a process for preparing thin metal layers and in particular for coating a material with a thin metal layer. In particular the invention aims at providing such a process while saving costs and for production on an industrial scale. In particular, the invention aims at providing a process for manufacturing such materials that would be environmental friendly and without manipulating particles or nanoparticles in dry powder.

The invention also aims at providing a composition for coating a substrate for providing optical properties such as for example a mirror surface, a colored surface, or an electronically conducting surface, or a thermally conducting surface.

The invention also aims at providing a material for photonic applications.

### DESCRIPTION OF THE INVENTION

The present inventors have discovered that a material according to the invention enables solving the here-above mentioned technical problems.

According to one aspect, the invention relates to a method for preparing a metal layer, said method comprising:
a) preparing a liquid composition comprising at least one precursor of at least one metal selected from Ag, Au, Pd, Pt Cu, Cr, Zn, and any mixture thereof, at least one solvent of said precursor and at least one photo-initiator, wherein the concentration of the precursor is of at least 0.6% by weight relative to the weight of the liquid composition;
b) depositing said liquid composition on a substrate thereby forming a liquid composition deposited on a substrate;
c) irradiating with a UV, Vis and IR source the liquid composition deposited on a substrate obtained at step b) thereby forming a metal layer comprising or consisting of said metal;
d) obtaining a metal layer.

In another aspect, the invention relates to a material comprising a substrate and a metal layer, said metal layer being in contact with said substrate, said metal layer consisting of particles of metal in spatial contact together thereby forming a continuous metal layer of particles.

In another aspect, the invention relates to a method for conducting heat or electricity wherein said method comprises contacting a metal layer of at least one material according to the present invention with heat or electricity and conducting heat or electricity, respectively, though said metal layer.

The average diameter of the metal particles is measured according to the following procedure:
Transmission electron microscopy (TEM) is used for measuring the average diameter of the metal particles. Measures are obtained using a Philips CM200 instrument with LaB6 cathode operated at 200 kV. A drop of liquid formulations was placed onto a copper grid, exposed to UV and placed onto the observation grid. This measurement also enables characterizing the size and morphology of the particles. Reference is made for example to: Transmission Electron Microscopy ; A Text Book for Materials Science D. B. Willians et C. B. Carter Ed. Springer Science ISBN 978-0-387-76500-6 LLC 1996-2009.

The morphology of the metal particles can be evaluated with Atomic force microscopy (AFM). AFM investigations can be performed on a Nanoscope V multimode AFM (Brucker) operating in tapping mode at ambient conditions. A 2 nm radius of curvature Si ultrasharp tip (SNL) with a Si₃N₄ cantilever of 0.37 N.m⁻¹ nominal spring constant could be used with a lateral scan rate of 1 to 2 Hz at 512 lines.

In one embodiment, said metal particles are metal nanoparticles.

In particular, the invention relates to a material, wherein metal particles have a mean diameter of from 1 to 100 nanometers, for example from 5 to 50 nanometers. For example metal particles present a size ranging from 10 to 50 nm. Accordingly, in one preferred embodiment, said metal particles are nanoparticles, possibly agglomerated. Preferably, nanoparticles form a continuous metallic layer.

In one embodiment, the invention relates to a material, wherein said metal particles have a mean diameter of from 100 nanometers to 1 micrometer, for example from 200 to 800 nanometers, when observed with TEM. Such particles could result from the aggregation of smaller particles. The mean diameter of said metal particles may also be observed by SEM.

Preferably, the metal particles in the metal layer are essentially the same particles. Advantageously, the metal particles are essentially the same particles as they are formed *in situ* starting from the same precursors. According to one embodiment, metal particles may form aggregates, for example in the surface layer.

Metal particles may present a variety of morphologies, such as irregular polygones, pentagons, triangles, hexagons or disks in plane shape.

In one embodiment, the metal particles present a round shape.

In one embodiment, the metal particles present a spherical shape.

In one embodiment, the metal particles present a rectangular shape.

In one embodiment, the metal particles present a polyhedron.

In one embodiment, the metal particles present a triangular prism shape.

Advantageously, the layer of metal particles is very thin.

In one embodiment, said layer of metal particles has a thickness of from 1 nanometer to 5000 micrometers.

In one embodiment, said layer of metal particles has a thickness of from 1 nanometer to 100 micrometers, or for example from 5 to 500 nanometers or from 5 to 50 nanometers.

In one embodiment, said layer of said metal particles has a thickness of from 1 to 100 nanometers.

In one embodiment, said layer of said metal particles has a thickness of at least 100 nanometers, for example from 100 to 500 nanometers.

In one embodiment, said layer of metal particles has a thickness of from 100 nanometers to 5000 micrometers, for example from 200 to 500 micrometers or from 550 to 2000 micrometers.

In one embodiment, said layer of metal particles comprises a gradient of the particles density. Preferably, in said gradient the highest density of particles is in contact with the substrate.

Typically, the metal layer is obtained at the interface between the substrate and the liquid composition of step a). In other words, the metal layer is obtained at the top surface of the substrate, i.e. the surface on which the liquid composition of step a) is deposited.

In one embodiment, said particles of metal present a decreasing disorder in the particles organization and coalescence from the substrate side to the opposite side of said metal layer.

In one embodiment, in said layer of metal particles the disorder of metal particles increases from the substrate side to atmosphere side or, in other words, the order of metal particles increases from atmosphere side to substrate side.

According to the invention, the invention relates to a material wherein said metal selected from the group consisting of Ag, Au, Pd, Pt, Cu, Cr, Zn, and any mixture or combination thereof. Such metal particles are prepared from one or more metal precursors.

In one specific embodiment, the metal particles are particles of silver.

In one specific embodiment, the metal particles are particles of gold.

In one specific embodiment, the metal particles are particles of copper. An example of such particles is described by Takahiro Ohkubo et al. "Nanospace-enhanced photoreduction for the synthesis of copper(I) oxide nanoparticles under visible-light irradiation", Journal of Colloid and Interface Science 421 (2014) 165-169, or by Xiaoqun Zhu at al. "Direct, Rapid, Facile Photochemical Method for Preparing Copper Nanoparticles and Copper Patterns", Langmuir 2012, 28, 14461-14469 (dx.doi.org/10.1021/Ia303244p), or by S. S. Joshi, et al. "Radiation Induced Synthesis and Characterization of Copper Nanoparticles", NanoStructured Materials, Vol. 10, No. 7, pp. 1135-1144, 1998.

In one specific embodiment, the metal particles are particles of palladium. An example of such particles is described by Subrata Kundu et al., "Formation of electrically conductive palladium nanowires on polymer scaffolds by photochemical approach", Colloids and Surfaces A: Physicochem. Eng. Aspects 360 (2010) 129-136, or by S. Navaladian et al. "A Rapid Synthesis of Oriented Palladium Nanoparticles by UV Irradiation", Nanoscale Res Lett (2009) 4:181-186 (DOI 10.1007/s11671-008-9223-4).

In one specific embodiment, the metal particles are particles of chromium.

In one specific embodiment, the metal particles are particles of tin.

In one embodiment, said metal particles comprise at least one metal at oxidation state zero (0).

In one embodiment, the metal particles comprise or are consisting of metal particles or of metal oxide particles or mixture thereof.

In one embodiment, the metal layer comprises or consists of metal particles having a surface oxidation and metal oxide particles. In particular, the metal layer may comprise a surface oxidation of larger metal particles and a complete oxidation of smaller metal particles.

It is included within the scope of the present invention that at least a part of metal present is at a different oxidation state, especially if the surface is in contact with an oxidizing element, for example such as air or oxygen.

In one embodiment, the metal layer comprises or consists of different populations of said metal particles. In one embodiment, the metal layer comprises or consists of different size distributions of the populations of said metal particles.

By "precursor of at least one electronically conducting metal" or "metal precursor" it is meant a chemical species suitable for forming metal particles or metal oxide particles during the irradiation step according to the method of the present invention in the presence of a photo-initiator.

According to the invention, the metal precursor comprises at least one metal selected from the group consisting of gold, silver, palladium, tin, copper, nickel, platinum, aluminum or any combination or mixture thereof.

In one embodiment, the metal precursor is a metal salt and preferably enables forming metal particles. In one embodiment, the metal precursor comprises a complex containing a metal atom or metal cation.

Metal particles provide notably a large range of optical properties depending on their size, and/or their shape.

As metal salts, halogen salts may be used such as chloride or bromide, or nitrate or acetate of metal elements. For example such metal salts may be selected from the group consisting of salt of silver, a salt of gold, a metal of tetrachloroaurate, a metal of tetrabromoaurate, a nitrate of metal, palladium acetate, palladium chloride, platinum chloride, coper chloride, manganese nitrate, tetrahydrate, manganese chloride, and any mixture thereof.

In one embodiment, the metal precursor is silver nitrate (AgNOs) or tetrachloroaurate.

The amount of metal salt in the liquid composition may vary depending on the desired properties of the final material. The amount of metal salt, calculated on the basis of all components present in the liquid composition, may vary from 0.6 to 20%, from 1 to 20%, and preferably is higher than 2% by weight with respect to the total weight of the liquid composition. In one specific embodiment, the metal salt is present at a concentration of 3 to 10 %, for example from 4 to 8%, by weight with respect to the total weight of the liquid composition.

Preferably, said concentration of metal precursor is of at least 1%, preferably of at least 1.5%, even more preferably of at least 2%, by weight relative to the total weight of the liquid composition.

In one embodiment, the concentration of metal precursor is less than 40%, preferably of less than 30%, even more preferably of less than 20%, by weight relative to the total weight of the liquid composition.

In one embodiment the concentration of metal precursor is of 2 to 10% by weight relative to the total weight of the liquid composition.

For example, said metal precursor is selected from the group consisting of a salt of an electronically conducting metal, for example silver nitrate, gold bromate, tetrachloroaurate, tetrabromoaurate, palladium chloride palladium acetate, platinum chloride, copper acetate, copper chloride, and any mixture thereof.

Advantageously, the reactive composition is deposited on a substrate. There is no particular limitation regarding the substrate, but some substrates may provide advantageous technical properties.

For example, the substrate is selected from the group consisting of silica; textile material; metal substrates, such as for example stainless steel, aluminum, alloy; wood; terephthalate; polyfluoroalkylene (tetrafluoroethylene - Teflon^{®}), plastic materials, and any mixture thereof. Silica includes derivative thereof such as glass (silicate or borosilicate glasses).

In one embodiment, said substrate is flexible. In one embodiment, said substrate is rigid.

In one embodiment, said substrate is a textile, for example a woven textile or a nonwoven textile.

The expression "reactive composition" designates the composition that forms a metal layer according to the invention, i.e. by implementing the process or method according to the invention. In one embodiment, the reactive composition is confined between two substrates with the same chemical composition (glass and glass) or a different chemical composition (for example glass and mica). Advantageously, the use of different substrates provides different optical properties with different populations of said metal particles.

Advantageously, the material of the invention is a composite material, i.e. comprises a substrate and a metal layer. The metal layer is advantageously in contact with the substrate.

The invention also relates to a substrate comprising at least one metal layer as defined according to the present invention.

The invention also relates to a substrate or composite material according to the present invention, wherein said substrate is a transparent substrate, for example glass, and wherein said metal layer comprises or consists of silver particles or nanoparticles

Advantageously, the solvent is a solvent of the metal precursor.

Advantageously, the solvent is a solvent of the photo-initiator.

Advantageously, step a) preparing a liquid composition comprises the complete dissolution of the metal precursors and photo-initiator in said solvent.

In one embodiment, said solvent is a protic solvent. In one embodiment, said solvent is a polar protic solvent.

In particular, said solvent is selected from the group consisting of water (H₂O), alcohols, in particular monoalcohol having from 1 to 4 carbon atoms, for example ethanol, carboxylic acid, esters, for example ethyl acetate, ethers, for example TetraHydroFurane, nitriles, for example acetonitrile, and any combination thereof.

In one embodiment, said solvent is ethanol or a mixture of ethanol and water.

In one embodiment, said solvent is a 10/90 to 90/10 mixture of alcohol and water. It can be for example a 50/50 mixture of alcohol and water.

Advantageously, said solvent is water.

In one embodiment, the liquid composition presents a viscosity of about the viscosity of the one or more solvents present.

In one embodiment, the liquid composition is a solution comprising or consisting of at least one metal precursor, at least one solvent, and at least one photo-initiator.

Advantageously, one or more solvents evaporate progressively during the irradiating step c), for example under the effect of its vapor tension.

Preferably, the photo-initiator contains one or several chromophore groups, i.e. a chemical structure able to absorb specific light radiations, and in particular UV or visible radiations, and upon appropriate irradiation, it generates highly reactive species such as radicals or ions.

A photo-initiator is typically a compound reducing a cationic metal in the presence of a UV light radiation. A photo-initiator is preferably a compound which, in the presence of a UV light radiation, undergoes a photo-reaction and produces reactive species such as radicals. The radical photo-initiator is preferably selected from the group consisting of for example the hydroxyalkylphenones, α-aminocetones, acylphosphine oxides, benzaldehyde, benzophenones, benzylic dicetals, thioxanthones and mixtures thereof. Preferably, the photo-initiator is selected from the group consisting of acylphosphine oxide, notably 2-Hydroxy-2-methyl-1-phenyl-propan-1-one or 2-Hydroxy-2-methylpropiophenone (Darocur 1173), bis (2,4,6-trimethylbenzoyl)-phenylphosphinoxide marketed under Irgacure 819, 1-[4-(2-hydroxyethoxy)-phenyl]-2-hydroxy-2-methyl-1-propane-1-one marketed under Irgacure 2959, 2-2-dimethoxy-1,2-di(phenyl)ethanone marketed under Irgacure 651, 2-(dimethylamino)-1-(4-morpholin-4-ylphenyl)-2-(phenylmethyl)butan-1-one marketed under Irgacure 369, bis(2,6-difluoro-3-(1(hydropyrro-1-yl)-phenyl)titanocene marketed under Irgacure 784, 1-hydroxycyclohexyl)-phenyl-methanone marketed under Irgacure 184, and ethyl-2,4,6-Trimethylbenzoylphenylphosphinate marketed under Lucirin TPO-L, now Irgacure TPO-L. Also Irgacure 500 which is a 1:1 mixture of 50% of 1-hydroxy-cyclohexyl-phenyl-cetone and 50 wt % of benzophenone may be used.

In one embodiment, said photo-initiator is 1-[4-(2-hydroxyethoxy)-phenyl]-2-hydroxy-2-methyl-1-propane-1-one (Irgacure 2959) [CAS: 106797-53-9].

When present in the mixture the amount of chromophore varies typically from 0.01% to 10 %, by weight relative to the total weight of the mixture.

Preferably, the concentration of the photo-initiator is sufficient to initiate the photoreduction of the metal precursor, and for example of from 0.05 to 10%, for example from 0.1 to 4%, preferably from 0.2 to 3%, by weight relative to the total weight of the liquid composition.

In one embodiment, the concentration of the photo-initiator is of 0.2 to 1% by weight relative to the total weight of the liquid composition.

In one embodiment, the concentration of the photo-initiator is of 0.3 to 0.5% by weight relative to the total weight of the liquid composition.

In one embodiment, the liquid composition comprises a stabilizer avoiding the oxidation of the metal particles to be formed according to the method of the present invention.

The invention also relates to a liquid composition as defined in the present invention.

The invention also relates to a method for preparing the material according to the invention wherein said liquid composition is deposited on a substrate.

The photo-generation in situ of metal particles is under the double kinetic control of the rate of reduction of the metal precursor cations that depends, itself, on photonic and chemical parameters, and of the rate of nucleation and growth of the native nanoparticles.

The invention also relates to a method wherein said irradiating step c) is performed in the presence of a UV source providing intensity sufficient to induce the photoreduction of the metal precursor to form metal particles thereby forming the metal layer, preferably a continuous metal layer.

In one embodiment, irradiating step c) is performed in the presence of a UV source providing a fluence of at least 50 mW/cm², preferably of at least 200 mW/cm² (in the range from 300 to 450 nm), on the liquid composition. Advantageously, the fluence is of at least 500 mW/cm², preferably of at least 600 mW/cm² in the range from 300 to 450 nm, on the liquid composition. Even preferably, the fluence is from 800 to 1500 mW/cm² (in the range from 300 to 450 nm) on the liquid composition. For example the intensity is of 1 W/cm².

In one embodiment, said irradiating step c) is performed during a time sufficient to induce the photoreduction of the metal precursor to form metal particles.

In one embodiment, said irradiating step c) is performed during at least 10 seconds, preferably at least 1 minutes. The time-period of the irradiation step c) is for example of 1s to 120 minutes, preferably of 1 to 60 minutes, advantageously of 1 to 40 minutes.

During the irradiation step c), the mixture is irradiated by a light radiation, the spectra of which presenting typically a maximum absorption wavelength in the range of 190 nm to 800 nm, and typically 200 nm to 500 nm. Preferably, the light radiation is absorbed by the chromophore present in the mixture.

Preferably, the spectrum of the light radiation covers at least in part the absorption spectrum of the chromophore present in the mixture. The light radiation spectrum is preferably in the UV domain. In one embodiment, the light radiation spectrum presents a maximum fluence in the 300-450 nm range.

In one embodiment, the light radiation spectrum is within the UV domain, i.e. from 280 nm to 400 nm.

The light radiation is preferably emitted by an artificial light source, non-natural, emitting within visible and/or ultraviolet wavelength, such as for example a discharge lamp (high, medium or low pressure), and incandescent lamp, a laser or a LED; One may use for example Hamamatsu lightningcure LC5, optionally equipped with an elliptic reflector.

The time period of irradiation is function of light source, power, amount and nature of photo-initiator and of metal precursor.

The irradiation is typically performed at room temperature, i.e. from 15° to 30° C, preferably from 20° to 25°C.

The present invention also relates to a one-step, one-pot method for *in situ* preparation of a metal layer as described in the invention.

In one embodiment, said liquid composition is deposited by spin coating, dip coating, spray coating, doctor blade coating, web coating, cup coating, slot/die coating, lip coating, roll-to-roll, printing, an ink deposit technique, ink printing, screenprinting, laser printing, microgravure, reverse microgravure, photolithography, serigraphic technique, spraying process or any combination thereof.

In one embodiment, said liquid composition is deposited by an ink deposit technique, for example by ink printing, or roll-to-roll.

According to one embodiment, the specific design is achieved by inkjet printing.

In one embodiment, said method comprises a variation of the irradiation of the UV source to induce the photo-reduction of the metal precursor according to a specific design.

According to one embodiment, the specific design is achieved by photolithography, for example contact lithography. In one embodiment a photomask is used.

For example, the UV irradiation of the liquid composition makes use of an amplitude mask. Such amplitude mask may comprise photoresist (light-sensitive material) which has a plurality of UV-transmissive and UV-opaque features indicative of the desired pattern for forming said specific design.

According to one embodiment, a thin film of UV-sensitive photoresist material is placed between the liquid composition of the invention and a UV source. Such film comprises areas protected by a UV-opaque material designed to make the desired specific design. In general, in contact lithography, the mask is in contact with the liquid composition or the substrate to be irradiated. Photoresist material is coated onto the liquid composition or substrate, a photomask is placed on the photoresistive material layer, exposed to UV radiations, then removed, the photoresistive material exposed to UV is removed enabling recovering the material with the substrate, with the desired specific design.

In one embodiment, the method of the invention relates in one embodiment to the preparation of one or more silver layers directly deposited onto one or more glass substrates.

In one embodiment, the method according to the present invention comprises e) forming another metal layer, for example by repeating steps a) to d).

In one embodiment, said another metal layer is located at another surface of said material.

In one embodiment, said another metal layer is located at the surface of said metal layer of said material obtained in step d).

For example, step c) of the method according to the invention forms a first metal layer, preferably a metal mirror layer, at one surface of the substrate, for example in contact with atmosphere. Another surface of the substrate or material is then exposed to a UV source to form a second metal layer, preferably a metal mirror layer. The surfaces are exposed sequentially or simultaneously to one or more UV sources to form the different layers at the same and/or different surfaces of the substrate or material.

In one embodiment, the liquid composition is placed on a transparent substrate (glass for example). The surface of the liquid composition in contact with atmosphere is exposed to a UV source to form a metal surface layer. In one embodiment, the material comprises two metal layers, for example one on a surface in contact with atmosphere and another one not in contact with atmosphere.

In one embodiment, the method according to the present invention comprises e) depositing a second liquid composition on a first metal layer, wherein said first metal layer is as defined in the present invention and wherein said second liquid composition is the same or a different liquid composition as defined in the present invention ;
f) irradiating with a UV, Vis or IR source the second liquid composition deposited at step e) thereby forming a second metal layer comprising or consisting of said metal;
d) obtaining a second metal layer in contact with the first metal layer.

The inventors have discovered an *in situ* and in a one step and one pot process for preparing such materials that overcome the here-above mentioned technical problems.

According to one aspect, said metal layer is located at least at a surface of said material.

Preferably, said metal layer forms an electronically conducting layer.

In one embodiment, said metal layer presents a resistivity (at 300 K) of less than 1.10⁻² Ohm/sq (Ohm per square).

Advantageously, said metal layer presents a good electric conductivity with a small thickness and the concentration of the metal precursor used in the liquid composition is low.

According to one aspect, said metal layer forms a reflective surface or layer, or a metal mirror surface or layer. The term "reflective surface" means that a beam of parallel light - a collimated beam - striking said surface under a given incidence is redirected backwards by said surface under an emergence angle equal to said incidence angle without deterioration of its wavefront, i.e. its optical characteristics. Therefore, such said reflective surface is able to reflect the image of an object. In one embodiment, said substrate is a transparent substrate, said metal layer forms a reflective surface in contact with said transparent substrate. When an object is placed in front of the material on the transparent substrate side, the image of said object is reflected on the surface of the metal layer in contact with said substrate and through said transparent substrate. The invention also relates to a method for reflecting an image, wherein said method comprising providing at least one material as defined in the present invention and having a transparent substrate, placing an object in front of said material on the transparent substrate side, reflecting the image of said object on the surface of the metal layer in contact with said substrate and through said transparent substrate.

In one embodiment, said metal layer forms a reflective surface with a reflectance exceeding 90 % in the 600-800 nm wavelength range.

In one embodiment, said metal layer forms a reflective surface with a reflectance exceeding 90 % in the 600-1500 nm wavelength range.

According to one aspect, said metal layer forms a metal mirror layer at the surface in contact with the substrate.

The present invention also relates to a material comprising a substrate and a metal layer, said metal layer being in contact with said substrate, said metal layer consisting of particles of metal in spatial contact together thereby forming a continuous metal layer of particles, wherein said metal layer forms a reflective surface in contact with said transparent substrate.

In one embodiment, said metal layer has a roughness on the side in contact with the substrate different than the roughness of the side not in contact with the substrate.

In one embodiment, said metal layer forms a metal mirror layer at the surface in contact with the substrate and the opposite surface of the metal layer forms a non-reflective surface. In one embodiment, said non-reflective surface presents a roughness higher than the reflective surface of the metal layer. The roughness of the surface opposite to the substrate side could be advantageous for a good adhesion of another layer, for example a protective layer.

In one embodiment, said metal layer forms a thermo-conducting layer.

In one embodiment, said metal layer presents a plasmonic surface.

The invention notably relates to a novel photo-assisted approach to prepare a metal layer. This photo-induced approach was discovered for *in situ* synthesis of metal particles or nanoparticles. This method is based on photo-reducing kinetics of the preparation of metal particles involving a precursor of at least one metal.

In particular, the invention relates to a material, wherein said metal layer comprises or consists of a continuous metal layer of metal metal particles or nanoparticles.

Advantageously, the material of the invention presents a metal mirror layer at only one surface of the material, the opposite surface of the material being free of any metal coating.

In another embodiment, the material of the invention presents a metal mirror layer at two different surfaces of the material. More specifically the material comprises a first metal layer on a first surface of the substrate and a second metal layer on an opposite surface of the substrate. The term "surface" designates here a plane limiting the body of the material.

In one embodiment, the metal layer comprises two image reflective surfaces or two mirror surfaces. In such an embodiment, the metal layer is prepared by a method wherein said liquid composition is placed in-between two substrates, in which substrates are transparent to UV-light and one or both surfaces of the liquid composition are irradiated by the UV-source.

In one specific embodiment, said metal layer forms, comprises or consists essentially of metal particles which are spatially close enough to conduct electrons and more specifically to conduct an electric current. In one embodiment, said metal layer forms a colored layer.

Advantageously, said color is dependent on the shape, size, density and composition of the metal particles.

In one embodiment, the method of the invention comprises a step of heat treating the metal layer deposited on the substrate. Said heat treatment may comprise or consist in the curing of the metal layer.

In one embodiment, a cover layer is placed in contact with the metal layer, opposite to the substrate side.

In another embodiment, a varnish cover layer, and advantageously a photo-polymerizable cover varnish layer, is used to protect the surface of the metal layer, for example from air or atmosphere or to form a mechanical protection or as a scratch resisting layer.

Said photo-polymerizable varnish layer is for example deposited on the surface of metal layer after photoreduction of the metal precursors.

The present application discloses a material or an object having a metal coating, wherein said metal coating is formed by a metal layer as described in the present invention. The material or object maybe coated completely or in part by said metal layer. In one embodiment, the surface of the material or object to be coated completely or in part forms the surface of a substrate on which the liquid composition is deposited. Then the liquid composition is irradiated and the metal layer forms on the material or object. The metal layer is bound to the material or object and do not detach easily.

The metal layer generated exhibit remarkable chemical stability.

The material of the invention, and in particular the metal layer, provides a good adhesion and/or cohesion of the metal layer with the substrate. Advantageously, when the substrate is porous, such as for example a textile substrate, the liquid composition may penetrate the surface of the porous substrate which provides a metal layer very cohesive with the substrate. This has the technical advantage of providing a metal layer of particles adhering to the substrate. This limits or avoids the delamination of the metal layer from the substrate.

In one embodiment, the method according to the invention does not use toxic formulations and no extra toxic stabilizers or reducing agents, as such; the method is carried out at room temperature and with a basic illumination device. Moreover, the method according to the invention avoids handling dry powder metal particles, especially nanoparticles, thus preventing from aggregation problems that usually make their dispersion difficult in liquid formulations.

In one specific embodiment, said textile substrate forms an intelligent textile comprising one or more captors intended to interact with the body of the person wearing the textile and an electronic device, and wherein said one or more captors are electronically connected to at least one area of said material.

In one aspect of the invention, said material is used for forming a metal mirror layer on a substrate. In one embodiment, said layer covers partially at least one surface of the substrate. In another embodiment, said layer covers totally at least one surface of the substrate.

The invention also relates to a method according to a method for conducting heat or electricity wherein said method comprises contacting an electronically conducting surface of at least one metal layer with heat or electricity and conducting heat or electricity, respectively, though said electronically conducting surface.

According to one aspect, the material of the present invention is used in conducting devices or more generally, for conduction. In such applications, the material is typically used as one or more coating layers or ink. These applications include for example, but are not limited to: conducting circuits; computer keyboard; heating elements; sensors including automotive sensors, biosensors; touchscreen; electroluminescent devices; intelligent clothing, intelligent textiles or electronic textiles.

According to one aspect, the material of the present invention is for optical applications.

In one embodiment, the design of one or more metal layers forms wires at one or more surfaces of a substrate or a material, such as for example a microelectronic conductor, a biocide material, an electronic component, a material for optics or analyzers, for example for surface enhanced Raman scattering (SERS), optical sensors, light filters or, in particular military optical elements, telescopes, flight electronic devices, analytical instruments, or lasers.

In one embodiment, the material of the present invention provides a bar code, an optical identification device, an optical secure keys or electromagnetic interference (EMI).

According to one aspect, the material of the present invention is for decoration, in particular for obtaining a mirror effect. Such applications include for example, but are not limited to: object covering, inks in particular for glass, textiles, etc.

According to one aspect, the material of the present invention is for anti-microbial applications. Such applications include for example, but are not limited to: covering of medical devices.

According to one aspect, the material of the present invention is for providing one or more plasmonic surfaces.

According to one aspect, the material of the present invention is for photonic applications.

In the figures:
Figure 1 represents schematically an embodiment wherein a material 1 comprises a substrate 10 a metal layer 20 comprising metal particles 22 and in which the disorder of metal particles 22 increases from the substrate side 15 to atmosphere side 25 or in other words the order of metal particles 22 increases from atmosphere side 25 to substrate side 15.
Figure 2 represents results obtained by EDXS analysis according to example 1.
Figures 3 to 5 represent XPS spectra obtained according to example 1.

Other aims, characteristics, and advantages of the invention will appear clearly to the skilled person in the art upon reading the explanatory description which makes reference to the examples which are given simply as illustrations and which in no way limit the scope of the invention.

The examples make up an integral part of the present invention and any characteristic which appears novel with respect to any prior state of the art from the description taken its entirety, including examples, makes up an integral part of the invention in its function and in its generality.

Thus, every example has a general scope.

In the examples, all percentages are given by weight, unless indicated otherwise, temperature is expressed in degree Celsius unless indicated otherwise. Also pressure and temperatures are atmospheric pressure and room temperature (around 20°C and 101 325 Pa), unless indicated otherwise.

### EXAMPLES

### Example 1: Preparation of the metal film on glass substrate

Silver nitrate (AgNOs) with a high purity (> 99%), ethanol (purity 96%) and H₂O distilled were purchased from Sigma-Aldrich and used as received. 2-Hydroxy-2-methylpropiophenone [CAS: No. 7473-98-5] was obtained from Aldrich.

The photochemical reactions were carried out with a Hamamatsu Lightningcure LC8 (Hg-Xe L8252) device fitted with a 365 nm-elliptical reflector. The experimental set up used to shape up the actinic beam delivered to the sample a maximum fluence of 800 mW/cm² in the 300-450 nm range.

Scanning electron microscopy (SEM) was used to characterize the metal film of silver particles. SEM samples were visualised directly on the glass slide. Measurements were carried out using a Philips CM200 instrument with LaB6 cathode at 200 kV.

The atomic force microscopy (AFM) investigations were performed on a Nanoscope V multimode AFM (Brucker) operating in tapping mode at ambient conditions. A 2 nm radius of curvature Si ultrasharp tip (SNL) with a Si₃N₄ cantilever of 0.37 N.m⁻¹ nominal spring constant was used with a lateral scan rate of 1 to 2 Hz at 512 lines.

X-ray photoelectron spectroscopy (XPS) analysis was performed on a VG Scienta (Uppsala, Sweden) SES 200-2 x-ray photoelectron spectrometer under ultra-high vacuum (P < 10-9 mbar). The spectrometer resolution at the Fermi level is about 0.4 eV. The depth analyzed extends up to about 8 nm. The monochromatized AlKα source (1486.6 eV) was operated at a power of 420 W (30 mA and 14 kV) and the spectra were acquired at a take-off angle of 90° (angle between the sample surface and photoemission direction). During acquisition, the pass energy was set to 100 eV for high-resolution and 500 eV for wide scan spectra. CASAXPS software (Casa Software Ltd, Teignmouth, UK, www.casaxps.com) was used for all peak fitting procedures.

The photosensitive formulation chromophore (0.5 wt.%) and H₂O (2 g) was prepared in a flask covered with aluminium foil to protect it from light. Magnetic stirring was carried out at 40°C for 10 min and after the heating was stopped and the metal precursor Ag⁺ (5 wt.%) was added (silver nitrate). This step ensures complete dissolution of the metal precursor and chromophore.

The reactive formulation was deposited by spin coating on a very thin layer on a substrate (glass slide).

The sample was set on a horizontal stand and irradiated at 1 W/cm² for 1 min. In parallel with the photochemical reaction, the solvent evaporated progressively under the effect of its vapour tension. After irradiation, a metal layer was formed on the surface of the substrate. The metal layer generated onto the substrate exhibited remarkable stability on the air and strong adhesion on the substrate. On the substrate side (side where the metal layer is in contact with the substrate), a metallic reflective surface having a mirror aspect can be observed through the glass substrate. On the substrate side, objects can be reflected on the formed metal layer thereby forming a metallic mirror surface. On the atmosphere side a metal surface can be observed.

Different samples were prepared according to the same method.

### Characterisation

The metal layers were characterized by **AFM** in order to study the roughness and the thickness of the deposited film on the glass substrate.

The AFM characterisations carried out in tapping mode, showed a film with high roughness on the air side.

The thickness of the thin film was about 1µm..

Additional examination of the nanostructures by **SEM** was carried out on the surface of the metal films (air side).

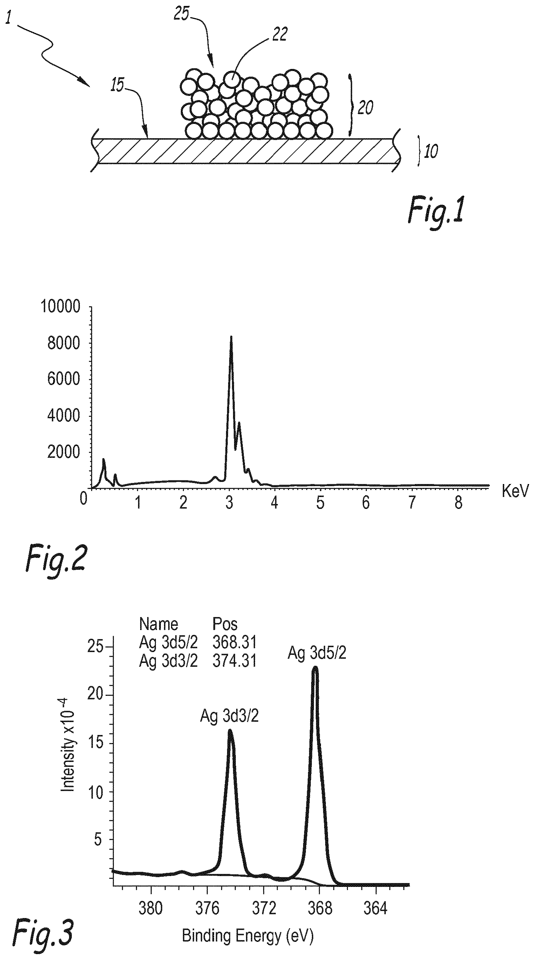

The image obtained showed a dispersion of Ag aggregates particles on the surface of the sample air side with a diameter ranging from some nm to 1-2 µm. Chemical analysis by energy-dispersive X-ray spectroscopy (EDXS) confirmed the presence of high signal corresponding to silver and very smalls corresponding to carbon and oxygen; the last two ones were mainly related to same traces of the photosensitiser (chromophore) used to the reaction (Figure 2).

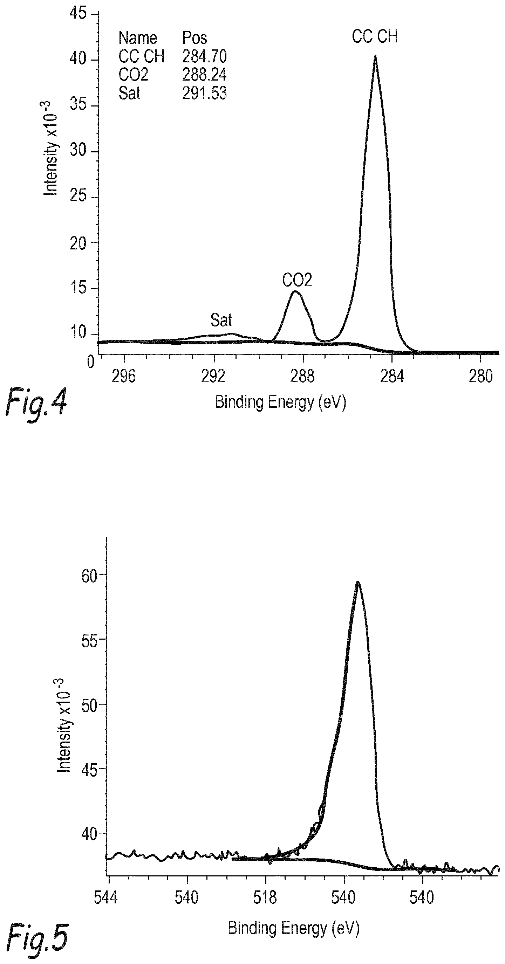

**XPS** analysis was carried out to study the surface chemistry of the silver films. The XPS spectra obtained on the surface of a sample exposed 1 minute to UV light (Figures 3, 4 and 5) confirmed the results obtained by EDXS analysis i.e. only Ag, C and O are detected, the last two ones being assigned to the traces of the degradation products of the chromophore. The Ag 3d spectrum (368.31 eV) clearly revealed the presence of Ag (0) at the surface. Table 1, shows the position of the Ag 3d (fig. 3), C1s (fig. 4) and O1s (fig. 5) peaks and the atomic concentrations.

The presence of the same three elements (Ag, C, O) was confirmed, and the Ag 3d spectrum showed only the peak corresponding to Ag(0) (368.31 eV). Since no other silver forms were visible, the reduction of Ag⁺ can be postulated to be complete.

**Table 1: XPS fitting and the relative atomics concentrations**

| **lock Id** | **Name** | **Position** | **Area/(RSF*T*MFP)** | **%At Conc** |
|---|---|---|---|---|
| **Ag3d** | Ag 3d5/2 | 368.31 | 22.6452 | 43.83 |
| **C1s** | CC CH | 284.70 | 17.4157 | 33.71 |
| **C1s** | CO2 | 288.24 | 2.99687 | 5.80 |
| **C1s** | Sat | 291.53 | 0.904551 | 1.75 |
| **O1s** | CO2 | 531.32 | 7.69785 | 14.90 |

### Example 2 : Preparation of a water photosensitive formulation

0.3% chromophore Darocur 1173 are added to 5 grams of distillated H₂O. Magnetic stirring was carried out at ambient temperature for 10 min for homogenization. To this mixture, 3 % by weight of AgNOs were added. The mixing is maintained until complete dissolution of the AgNOs about 3 min. The formulation is kept off from any light.

3 drops of this formulation are disposed on a glass substrate and coated with thin layer by the solution and then irradiated under UV lamp during 35 sec at a power of 1100 mW/cm². The glass substrate is only slightly washed with H₂O before utilization.

A metal layer forming a metal mirror on the glass substrate side is obtained and very well attached to the substrate. Moreover on the other side, air side the metal layer is rough.

The metal layer is of submicrometric thickness.

The resistance is R= 0,2 Ω and depending directly on the thickness and photonic and chemical conditions.

The atomic force microscopy (AFM) as described in example 1.

Once the irradiation was stopped, the Ag films were characterized by AFM in order to study the roughness of the as-synthesized silver layers. The AFM characterisations carried out in tapping mode, showed well dispersed nanostructures. The topography is fairly irregular. The roughness was visualized on the AFM images (topography and phase).

### X-ray photoelectron spectroscopy (XPS) characterisation

XPS analysis was performed as described in Example 1. The intensity area was determined using integrated peak areas of each component and taking into account the transmission factor of spectrometer, means free path, and sensibility factor of each atom.

XPS analysis was carried out to study the surface chemistry of these thin layers. The main element is Ag. Some other elements are also present (O, C). C and O come by the photolysis products of the chromophore. The spectrum of Ag 3d 5/2 (368.21 eV) supported the position of the peak corresponding to silver Ag(0).

### Scanning electron microscopy SEM characterization of sample with water

The SEM investigations were performed on a FEI Quanta 400 Scanning electron microscope. Images were recorded by SEM on the surface of the silver layer as it is. The images showed a good dispersion of particles obtained on the surface of the sample with a diameter ranging from 100 nm to 1µm. Chemical analysis by energy-dispersive X-ray spectroscopy (EDXS) confirms the presence of signals corresponding to silver, carbon and oxygen; the last two ones are related to the photolysis products of the chromophore. The Au signal is from the gold metallization of the sample before characterization (preparation necessary for the analyze)

Several diameters of AgNPs agglomerates were measured: D1=0.85 µm ; D2=0.48 µm ; D3=0.41µm.

### Example 3 : Preparation of a water/ethanol photosensitive formulation

0.5% chromophore Darocur 1173are added to 5 grams solvent EtOH/H₂O 50/50 was prepared in a flask covered with aluminium foil to protect it from light. Magnetic stirring was carried out at ambient temperature for 15 min in the case of EtOH/H₂O 50/50. To this mixture, 5 % by weight of AgNOs were added. The mixing is maintained until complete dissolution of the AgNOs about 30 min at ambient temperature.

1 drop of the reactive formulation was placed on the glass slide on a horizontal stand and a thin layer was coated. The sample was then irradiated under UV lamp during 30 sec at about 1100 mW/cm2.

A metal layer forming a metal mirror on the glass substrate side is obtained and very well attached to the substrate. Moreover on the other side, air side the metal layer is rough (according to Scanning electron microscopy SEM characterization).

The X-ray photoelectron spectroscopy (XPS) characterisation of this sample was as follows:

| **Sample Identifier** | **Block Id** | **Name** | **Position** | **Area/(RSF*T*MFP)** | **%At Conc** |
|---|---|---|---|---|---|
| MA 11 | Ag3d | Ag3d5/2 | 368.30 | 71.4411 | 44.20 |
| | C1s | CC CH | 284.30 | 52.9185 | 32.74 |
| | C1s | C=O | 287.64 | 7.87792 | 4.87 |
| | C1s | C-O | 285.31 | 6.02964 | 3.73 |
| | O1s | CO | 530.85 | 17.1302 | 10.60 |
| | O1s | NO3- | 532.46 | 4.67682 | 2.89 |
| | N1s | NO3- | 406 | 1.55978 | 0.97 |

### Example 4 : Preparation with an ethanol photosensitive formulation

0.5% chromophore Darocur 1173 are added to 5 grams solvent EtOH in a flask covered with aluminium foil to protect it from light. Magnetic stirring was carried out at ambient temperature for 15 min. To this mixture, 5 % by weight of AgNOs were added and mixed for 60 min at ambient temperature.

1 drop of the reactive formulation was placed on the glass slide on a horizontal stand and a thin layer was coated. The sample was then irradiated under UV lamp during 25 sec at about 1100 mW/cm2.

A metal layer forming a metal mirror on the glass substrate side is obtained and very well attached to the substrate. Moreover on the other side, air side the metal layer is rough (according to Scanning electron microscopy SEM characterization).

X-ray photoelectron spectroscopy (XPS) characterisation of this sample was as follows:

| **Sample Identifier** | **Block Id** | **Name** | **Position** | **Area/(RSF*T*MFP)** | **%At Conc** |
|---|---|---|---|---|---|
| MA 12 | Ag3d | Ag3d5/2 | 368.30 | 52.0201 | 31.36 |
| | C1s | CC CH | 284.36 | 58.7022 | 35.39 |
| | C1s | C=O | 287.67 | 9.03432 | 5.45 |
| | C1s | C-O | 285.58 | 7.87922 | 4.75 |
| | O1s | CO | 530.89 | 16.1924 | 9.76 |
| | O1s | NO3- | 532.23 | 16.5315 | 9.97 |
| | N1s | NO3- | 406.20 | 5.49999 | 3.32 |

### Example 5 : Preparation of a water/ethanol photosensitive formulation with gold (Au)

0.5% chromophore Darocur 1173 were added to 5 grams of a mixture of solvents EtOH/H₂O 10/90 in a flask covered with aluminium foil to protect it from light. Magnetic stirring was carried out at ambient temperature for 30 min. To this mixture, 2 % by weight of HAuCl₄ were added. The mixing is maintained until complete dissolution of the HAuCl₄, about 5 min at ambient temperature (20°C).

3 drops of the reactive formulation was placed on the glass slide on a horizontal stand and a thin layer was coated. The sample was then irradiated under UV lamp during 1min 30 sec at about 650 mW/cm2 UVA.

The resistance is about R= 0.5 Ω and depending directly on the thickness and photonic and chemical conditions.

## Claims

1. A one-step, one-pot method for *in situ* preparing a metal layer, said method comprising:
a) preparing a liquid composition comprising at least one precursor of at least one metal selected from Ag, Au, Pd, Pt Cu, Cr, Zn, and any mixture thereof, at least one solvent of said precursor and at least one photo-initiator, wherein the concentration of the precursor is of at least 0.6% by weight relative to the weight of the liquid composition;
b) depositing said liquid composition on a substrate thereby forming a liquid composition deposited on a substrate ;
c) irradiating with a UV, Vis and IR source the liquid composition deposited on a substrate obtained at step b) thereby forming a metal layer comprising or consisting of said metal;
d) obtaining a metal layer in contact with said substrate.

2. The method according to claim 1, wherein said irradiating step c) is performed in the presence of a UV source providing an intensity sufficient to induce photoreduction of the precursor and to form metal particles thereby forming the metal layer, preferably a continuous metal layer.

3. The method according to any one of claims 1 to 2, wherein said irradiating step c) is performed in the presence of a UV source providing a fluence of at least 500 mW/cm², preferably of at least 600 mW/cm² in the range from 300 to 450 nm, on the liquid composition.

4. The method according to any one of claims 1 to 3, wherein said irradiating step c) is performed during a time sufficient to induce the photoreduction of the precursor to form metal particles.

5. The method according to any one of claims 1 to 4, wherein said metal layer forms a metal mirror surface.

6. The method according to any one of claims 1 to 5, wherein said metal layer comprises silver particles or nanoparticles.

7. The method according to any one of claims 1 to 6, wherein said metal layer has a thickness of from 1 nanometer to 5000 micrometers.

8. The method according to any one of claims 1 to 7, wherein said substrate is selected from the group consisting of silica; textile; metal substrates, wood, terephthalate, plastic materials, and any mixture thereof.

9. The method according to any one of claims 1 to 8, wherein said substrate is a glass.

10. The method according to any one of claims 1 to 9, wherein said substrate is a silicate or a borosilicate glass.

11. The method according to any one of claims 1 to 10, wherein said substrate is a transparent substrate, and said metal layer forms a reflective surface in contact with said transparent substrate.

12. The method according to any one of claims 1 to 11, wherein said liquid composition is deposited by spin coating, dip coating, spray coating, doctor blade coating, web coating, cup coating, slot/die coating, lip coating, roll-to-roll, printing, an ink deposit technique, ink printing, screenprinting, laser printing, microgravure, reverse microgravure, photolithography, serigraphic technique, spraying process or any combination thereof.

13. A material comprising a substrate and a metal layer obtained by the method according to any one of claims 1 to 12, said metal layer being in contact with said substrate, said metal layer consisting of particles of metal in spatial contact together thereby forming a continuous metal layer of particles, wherein said substrate is a transparent substrate, and said metal layer forms a reflective surface in contact with said transparent substrate.

14. The material according to claim 13, wherein said substrate is a glass.

15. The material according to any one of claims 13 or 14, wherein said substrate is a silicate or a borosilicate glass.

16. The material according to any one of claims 13 to 15, wherein said particles of metal present a decreasing disorder in the particles organization and coalescence from the substrate side to the opposite side of said metal layer.

17. A method for conducting heat or electricity wherein said method comprises contacting a metal layer of at least one material according to any one of claims 13 to 16; with heat or electricity and conducting heat or electricity, respectively, through said metal layer.

## Patentansprüche

1. Ein einstufiges Eintopfverfahren zum Herstellen *vor Ort* einer Metallschicht, das Verfahren umfassend:
a) Herstellen einer flüssigen Zusammensetzung, umfassend mindestens ein Ausgangsmaterial aus mindestens einem Metall, ausgewählt aus Ag, Au, Pd, Pt, Cu, Cr, Zn und irgendein beliebiges Gemisch davon, mindestens ein Lösungsmittel des Ausgangsmaterials und mindestens einen Photoinitiator, wobei die Konzentration des Ausgangsmaterials mindestens 0,6 Gewichtsprozent, bezogen auf das Gewicht der flüssigen Zusammensetzung, ist;
b) Aufbringen der flüssigen Zusammensetzung auf ein Substrat, wodurch eine flüssige Zusammensetzung gebildet wird, die auf ein Substrat aufgebracht ist;
c) Bestrahlen der flüssigen Zusammensetzung, die auf einem in Schritt b) erlangten Substrat aufgebracht wurde, mit einer UV-, Vis- und IR-Quelle, wodurch eine Metallschicht gebildet wird, die das Metall umfasst oder daraus besteht;
d) Herstellen einer Metallschicht in Kontakt mit dem Substrat.

2. Verfahren nach Anspruch 1, wobei der Bestrahlungsschritt c) in Anwesenheit einer UV-Quelle ausgeführt wird, die eine ausreichende Intensität bereitstellt, um eine Photoreduktion des Ausgangsmaterials zu induzieren und Metallpartikel zu bilden, wodurch die Metallschicht, vorzugsweise eine kontinuierliche Metallschicht, gebildet wird.

3. Verfahren nach einem der Ansprüche 1 bis 2, wobei der Bestrahlungsschritt c) in Anwesenheit einer UV-Quelle ausgeführt wird, die eine Fluenz von mindestens 500 mW/cm², vorzugsweise von mindestens 600 mW/cm² in dem Bereich von 300 bis 450 nm, auf die flüssige Zusammensetzung bereitstellt.

4. Verfahren nach einem der Ansprüche 1 bis 3, wobei der Bestrahlungsschritt c) während einer Zeit ausgeführt wird, die ausreichend ist, um die Photoreduktion des Ausgangsmaterials zum Bilden von Metallpartikeln zu induzieren.

5. Verfahren nach einem der Ansprüche 1 bis 4, wobei die Metallschicht eine Metallspiegelfläche bildet.

6. Verfahren nach einem der Ansprüche 1 bis 5, wobei die Metallschicht Silberpartikel oder Nanopartikel umfasst.

7. Verfahren nach einem der Ansprüche 1 bis 6, wobei die Metallschicht eine Stärke von 1 Nanometer bis 5000 Mikrometer aufweist.

8. Verfahren nach einem der Ansprüche 1 bis 7, wobei die Faser ausgewählt ist aus der Gruppe, bestehend aus Kieselsäure, Textil, Metallsubstraten, Holz, Terephthalat, Kunststoffen und einem beliebigen Gemisch davon.

9. Verfahren nach einem der Ansprüche 1 bis 8, wobei das Substrat ein Glas ist.

10. Verfahren nach einem der Ansprüche 1 bis 9, wobei das Substrat ein Silikat oder ein Borosilikatglas ist.

11. Verfahren nach einem der Ansprüche 1 bis 10, wobei das Substrat ein transparentes Substrat ist und die Metallschicht eine reflektierende Oberfläche in Kontakt mit dem transparenten Substrat bildet.

12. Verfahren nach einem der Ansprüche 1 bis 11, wobei die flüssige Zusammensetzung durch Schleuderbeschichtung, Tauchbeschichtung, Sprühbeschichtung, Rakelbeschichtung, Bahnbeschichtung, Becherbeschichtung, Schlitz-/Stempelbeschichtung, Lippenbeschichtung, Rolle-zu-Rolle-Beschichtung, Druck, ein Farbauftragsverfahren, Farbdruck, Siebdruck, Laserdruck, Mikrogravur, umgekehrte Mikrogravur, Fotolithografie, Siebdruckverfahren, Sprühverfahren oder eine Kombination davon aufgebracht wird.

13. Material, umfassend ein Substrat und eine Metallschicht, die durch das Verfahren nach einem der Ansprüche 1 bis 12 erlangt wird, wobei die Metallschicht in Kontakt mit dem Substrat ist, wobei die Metallschicht aus Metallteilchen besteht, die in räumlichem Kontakt miteinander stehen und dadurch eine kontinuierliche Metallschicht aus Teilchen bilden, wobei das Substrat ein transparentes Substrat ist und die Metallschicht eine reflektierende Oberfläche in Kontakt mit dem transparenten Substrat bildet.

14. Verbindung nach Anspruch 13, wobei das Substrat ein Glas ist.

15. Material nach einem der Ansprüche 13 oder 14, wobei das Substrat ein Silikat oder ein Borosilikatglas ist.

16. Material nach einem der Ansprüche 13 bis 15, wobei die Metallteilchen eine abnehmende Unordnung in der Teilchenorganisation und Koaleszenz von der Substratseite zu der gegenüberliegenden Seite der Metallschicht aufweisen.

17. Verfahren zum Leiten von Wärme oder Elektrizität, wobei das Verfahren ein Inkontaktbringen einer Metallschicht aus mindestens einem Material nach einem der Ansprüche 13 bis 16 mit Wärme oder Elektrizität und ein Leiten von Wärme bzw. Elektrizität durch die Metallschicht umfasst.

## Revendications

1. Procédé en une étape, à récipient unique, pour préparer *in situ* une couche métallique, ledit procédé comprenant :
a) la préparation d'une composition liquide comprenant au moins un précurseur d'au moins un métal choisi parmi Ag, Au, Pd, Pt, Cu, Cr, Zn, et tout mélange de ceux-ci, au moins un solvant dudit précurseur et au moins un photo-initiateur, dans lequel la concentration du précurseur est d'au moins 0,6 % en poids par rapport au poids de la composition liquide ;
b) le dépôt de ladite composition liquide sur un substrat, formant ainsi une composition liquide déposée sur un substrat ;
c) l'irradiation avec une source UV, Vis et IR de la composition liquide déposée sur un substrat obtenu à l'étape b), formant ainsi une couche métallique comprenant ou constituée dudit métal ;
d) l'obtention d'une couche métallique en contact avec ledit substrat.

2. Procédé selon la revendication 1, dans lequel ladite étape d'irradiation c) est réalisée en présence d'une source UV fournissant une intensité suffisante pour induire une photoréduction du précurseur et pour former des particules métalliques, formant ainsi la couche métallique, de préférence une couche métallique continue.

3. Procédé selon l'une quelconque des revendications 1 à 2, dans lequel ladite étape d'irradiation c) est réalisée en présence d'une source UV fournissant une fluence d'au moins 500 mW/cm², de préférence d'au moins 600 mW/cm² dans la gamme de 300 à 450 nm, sur la composition liquide.

4. Procédé selon l'une quelconque des revendications 1 à 3, dans lequel ladite étape d'irradiation c) est réalisée pendant une durée suffisante pour induire la photoréduction du précurseur pour former des particules métalliques.

5. Procédé selon l'une quelconque des revendications 1 à 4, dans lequel ladite couche métallique forme une surface en miroir métallique.

6. Procédé selon l'une quelconque des revendications 1 à 5, dans lequel ladite couche métallique comprend des particules ou des nanoparticules d'argent.

7. Procédé selon l'une quelconque des revendications 1 à 6, dans lequel ladite couche métallique présente une épaisseur comprise entre 1 nanomètre et 5000 micromètres.

8. Procédé selon l'une quelconque des revendications 1 à 7, dans lequel ledit substrat est choisi dans le groupe constitué par de la silice ; du textile ; des substrats métalliques, du bois, du téréphtalate, des matières plastiques, et tout mélange de ceux-ci.

9. Procédé selon l'une quelconque des revendications 1 à 8, dans lequel ledit substrat est un verre.

10. Procédé selon l'une quelconque des revendications 1 à 9, dans lequel ledit substrat est un silicate ou un verre borosilicaté.

11. Procédé selon l'une quelconque des revendications 1 à 10, dans lequel ledit substrat est un substrat transparent, et ladite couche métallique forme une surface réfléchissante en contact avec ledit substrat transparent.

12. Procédé selon l'une quelconque des revendications 1 à 11, dans lequel ladite composition liquide est déposée par revêtement par centrifugation, revêtement par immersion, revêtement par pulvérisation, revêtement par racle, revêtement par bande, revêtement par coupelle, revêtement par fente/matrice, revêtement par lèvre, rouleau à rouleau, impression, technique de dépôt d'encre, impression à l'encre, sérigraphie, impression au laser, microgravure, microgravure inverse, photolithographie, technique sérigraphique, procédé de pulvérisation ou toute combinaison de ceux-ci.

13. Matériau comprenant un substrat et une couche métallique obtenue par le procédé selon l'une quelconque des revendications 1 à 12, ladite couche métallique étant en contact avec ledit substrat, ladite couche métallique étant constituée de particules de métal en contact dans l'espace ensemble formant ainsi une couche métallique continue de particules, dans lequel ledit substrat est un substrat transparent, et ladite couche métallique forme une surface réfléchissante en contact avec ledit substrat transparent.

14. Matériau selon la revendication 13, dans lequel ledit substrat est un verre.

15. Matériau selon l'une quelconque des revendications 13 ou 14, dans lequel ledit substrat est un silicate ou un verre borosilicaté.

16. Matériau selon l'une quelconque des revendications 13 à 15, dans lequel lesdites particules de métal présentent un désordre décroissant dans l'organisation et la coalescence des particules du côté du substrat vers le côté opposé de ladite couche métallique.

17. Procédé pour conduire la chaleur ou l'électricité, dans lequel ledit procédé comprend la mise en contact d'une couche métallique d'au moins un matériau selon l'une quelconque des revendications 13 à 16 ; avec de la chaleur ou de l'électricité et la conduite de la chaleur ou de l'électricité, respectivement, à travers ladite couche métallique.
